(19) Europäisches Patentamt
European Patent Office
Office européen des brevets

(11) **EP 2 816 721 B1**

(12) **EUROPÄISCHE PATENTSCHRIFT**

(45) Veröffentlichungstag und Bekanntmachung des Hinweises auf die Patenterteilung:
**31.10.2018 Patentblatt 2018/44**

(51) Int Cl.:
***H02M 7/5387*** *(2007.01)*　***H02P 21/22*** *(2016.01)*
***H02P 29/50*** *(2016.01)*

(21) Anmeldenummer: **13172257.1**

(22) Anmeldetag: **17.06.2013**

(54) **VERFAHREN ZUM BETRIEB EINER ANTRIEBSSTEUERUNGSEINRICHTUNG, VORRICHTUNG MIT MITTELN ZUR AUSFÜHRUNG DES VERFAHRENS UND ANTRIEBSSTEUERUNGSEINRICHTUNG MIT EINER SOLCHEN VORRICHTUNG**

METHOD FOR OPERATING A DRIVE CONTROL DEVICE, DEVICE PROVIDED WITH MEANS FOR EXECUTING THE METHOD AND DRIVE CONTROL DEVICE WITH SUCH A DEVICE

PROCÉDÉ DE FONCTIONNEMENT D'UN DISPOSITIF DE COMMANDE D'ENTRAÎNEMENT, DISPOSITIF DOTÉ DE MOYENS POUR LA RÉALISATION DU PROCÉDÉ ET DISPOSITIF DE COMMANDE D'ENTRAÎNEMENT DOTÉ D'UN TEL DISPOSITIF

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**24.12.2014 Patentblatt 2014/52**

(73) Patentinhaber: **Siemens Aktiengesellschaft**
**80333 München (DE)**

(72) Erfinder:
 • **Bauer, Franz**
 **91074 Herzogenaurach (DE)**
 • **Schierling, Hubert**
 **91052 Erlangen (DE)**

(56) Entgegenhaltungen:
 • **STEIMEL A: "Direct Self-Control and Synchronous Pulse Techniques for High-Power Traction Inverters in Comparison", IEEE TRANSACTIONS ON INDUSTRIAL ELECTRONICS, IEEE SERVICE CENTER, PISCATAWAY, NJ, USA, Bd. 51, Nr. 4, 1. August 2004 (2004-08-01) , Seiten 810-820, XP011115702, ISSN: 0278-0046, DOI: 10.1109/TIE.2004.831730**

**Beschreibung**

Die Erfindung betrifft ein Verfahren zum Betrieb einer Antriebssteuerungseinrichtung gemäß Anspruch 1, eine Vorrichtung mit Mitteln zur Ausführung des Verfahrens gemäß Anspruch 3 und eine Antriebssteuerungseinrichtung mit einer solchen Vorrichtung gemäß Anspruch 10. Vorteilhafte Ausführungsformen sind in den abhängigen Ansprüchen definiert.

In vielen Anwendungen entsteht bei einem hier und im Folgenden allgemein als Antriebssteuerungseinrichtung bezeichneten Umrichterantrieb mit Spannungszwischenkreis aufgrund sogenannter Harmonischer eine wellige Zwischenkreisspannung. Wird beispielsweise der Zwischenkreis über eine ungesteuerte Diodenbrücke aus dem Drehstromnetz gespeist, ist die Zwischenkreisspannung stationär periodisch und enthält die Vielfachen der sechsfachen Netzspeisefrequenz. Daneben können bei unsymmetrischen Netzen weitere Harmonische (z.B. die zweifache der Netzspeisefrequenz) enthalten sein.

Eine Welligkeit in der Zwischenkreisspannung erzeugt abhängig von der Ausgangsfrequenz eines Pulsumrichters Subharmonische in der Motorspannung und im Motorstrom, wenn der Einfluss der Zwischenkreisspannung durch das Ansteuerverfahren nicht kompensiert werden kann. Dies ist zum Beispiel bei einer Übersteuerung oder bei einer nichtidealen Kompensation durch zeitlichen Verzug der Spannungsmessung der Fall. Besonders kritisch sind Ausgangsfrequenzen, bei denen die Frequenz der entstehenden Subharmonischen klein ist oder gar zur Gleichgröße wird. In diesem Fall erzeugen die Spannungsharmonischen hohe Anteile in den Ausgangsströmen, die sich auf die Regelung, die Qualität des Drehmoments und die Belastung des Wechselrichters negativ auswirken.

Bisher wurde das Problem der unerwünschten Subharmonischen dadurch gelöst, dass bei kritischen Ausgangsfrequenzen der Aussteuergrad soweit abgesenkt wurde, dass durch Kompensation der Zwischenkreisspannung ein Großteil dieser Subharmonischen vermieden werden konnte. Dies führt allerdings zu einer Minderausnutzung des Umrichters, da in diesen Bereichen nicht mehr die maximal mögliche Ausgangsspannung zur Verfügung steht. Zusätzlich ist bei bisherigen Ansätzen nicht optimal, dass bei einer nichtidealen Kompensation der Zwischenkreisspannung auch im linearen Bereich des Modulators subharmonische Anteile verbleiben, die in Kauf genommen werden müssen.

Der Erfindung liegt daher die Aufgabe zugrunde, ein Verfahren und eine Vorrichtung anzugeben, das bzw. die eine Reduktion der unerwünschten Subharmonischen ermöglicht.

Diese Aufgabe wird erfindungsgemäß mit einem Verfahren zum Betrieb einer Antriebssteuerungseinrichtung oder eines Antriebssteuerungsgeräts, die bzw. das einen Umrichter mit einem Spannungszwischenkreis umfasst, mit den Merkmalen des Anspruchs 1 gelöst. Dazu ist bei dem Verfahren Folgendes vorgesehen: Im Betrieb des Umrichters erzeugte Phasenströme werden kontinuierlich oder zu geeigneten Abtastzeitpunkten oder auch als Mittelwerte über geeignete Zeitintervalle gemessen. Aus den Phasenströmen wird ein Stromvektor ($\underline{i}_{\alpha\beta}$) in einem ersten Koordinatensystem ($\alpha\beta$-Koordinatensystem) gebildet. Der Stromvektor ($\underline{i}_{\alpha\beta}$) wird, insbesondere mittels eines ersten Vektordrehers, um einen Transformationswinkel ($\varphi_{fSH}$) in ein zweites Koordinatensystem (xy-Koordinatensystem) gedreht. Ein nach der Drehung resultierender Stromvektor ($\underline{i}_{xy}$) in dem zweiten Koordinatensystem wird einem Regler zugeführt. Ein am Ausgang des Reglers resultierender Spannungsvektor ($d\underline{u}_{xy}$) wird, insbesondere mittels eines zweiten Vektordrehers, um einen Transformationswinkel ($\varphi_{fSH}$) mit derselben Änderungsgeschwindigkeit zurück in das erste Koordinatensystem gedreht. Schließlich wird der resultierende Spannungsvektor ($d\underline{u}_{\alpha\beta}$) in dem ersten Koordinatensystem als zu einer u/f-Steuerung oder Vektorregelung zusätzliche Einflussgröße zur Ansteuerung des Umrichters verwendet.

Die Drehung des zunächst in dem ersten Koordinatensystem vorliegenden Stromvektors ($\underline{i}_{\alpha\beta}$) um den Transformationswinkel ($\varphi_{fSH}$) in das zweite Koordinatensystem bewirkt, dass in dem resultierenden Stromvektor ($\underline{i}_{xy}$) in dem zweiten Koordinatensystem - genauer in dem zeitlichen Verlauf des resultierenden Stromvektors ($\underline{i}_{xy}(t)$) - die auftretenden Subharmonischen zu Gleichgrößen werden. Solche Gleichgrößen lassen sich mit einem Regler gut ausregeln.

Die Drehung zurück in das erste Koordinatensystem kann mit demselben Transformationswinkel ($\varphi_{fSH}$) erfolgen, mit dem zuvor der Stromvektor ($\underline{i}_{\alpha\beta}$) in das zweite Koordinatensystem gedreht wurde. Der Transformationswinkel der späteren Drehung kann sich jedoch von dem zuvor verwendeten Transformationswinkel ($\varphi_{fSH}$) um eine Konstante unterscheiden. Wesentlich ist die gleiche Änderungsgeschwindigkeit der Transformationswinkel. Eine gleiche Änderungsgeschwindigkeit ist gleichbedeutend mit einer gleichen Transformationsfrequenz.

Der Transformationswinkel ($\varphi_{fSH}$) wird dabei anhand einer kritischen subharmonischen Frequenz ($f_{SH}$) ermittelt. Die Ausführung des Verfahrens bewirkt dann in vorteilhafter Weise, dass genau die jeweils vorgegebene kritische subharmonische Frequenz ($f_{SH}$) ausgeregelt wird. Als kritische subharmonische Frequenz ($f_{SH}$) wird eine subharmonische Frequenz mit einer nicht unerheblichen und damit störenden Amplitude der Modulationsprodukte verstanden.

Es wird also zur Vermeidung der Subharmonischen eine Regelung vorgeschlagen, die die Subharmonischen weitgehend ausregelt. Das Verfahren lässt sich zusammen mit u/f- Steuerungen und zusammen mit feldorientierten Regelverfahren anwenden. Die Regelung arbeitet dabei mit Größen, die aufgrund eines vorgegebenen oder im Rahmen des Verfahrens bestimmten Transformationswinkels ($\varphi_{fSH}$) einer Drehung aus einem ersten Koordinatensystem in ein zweites Koordinatensystem und schließlich aus dem zweiten Koordinatensystem zurück in das erste Koordinatensystem unterworfen werden. Die doppelte Drehung bewirkt, dass die Regelung mit Größen in dem zweiten Koordinatensystem arbeiten kann, in dem die auszuregelnde Subharmonische als Gleichgröße auftritt.

Der Fachartikel "Direct Self-Control and Synchronous Pulse Techniques for High-Power Traction Inverters in Comparison" von Andreas Steimel in IEEE Transactions on Industrial Electronics, Bd 51, Nr. 4, Seiten 810-820 vom 01.08.2004 offenbart ein Verfahren zum Betrieb einer Antriebssteuerungseinrichtung, die einen Umrichter mit einem Spannungszwischenkreis umfasst, mit folgenden Schritten:

- Messung im Betrieb mittels des Umrichters erzeugter Phasenströme;
- Bildung eines Stromvektors in einem ersten Koordinatensystem aus den gemessenen Phasenströmen;
- Drehung des Stromvektors um einen Transformationswinkel in ein zweites Koordinatensystem;
- Rückführung eines resultierenden Stromvektors in dem zweiten Koordinatensystem zu einem Regler;
- Zurückdrehen eines am Ausgang des Reglers resultierenden Spannungsvektors um den Transformationswinkel oder einen mit derselben Änderungsgeschwindigkeit des Transformationswinkels drehenden Transformationswinkel in das erste Koordinatensystem;
- Verwendung des resultierenden Spannungsvektors in dem ersten Koordinatensystem als zusätzliche Einflussgröße zu einer u/f-Steuerung oder Vektorregelung zur Ansteuerung des Umrichters.

Die oben genannte Aufgabe wird ebenfalls mittels einer Vorrichtung gelöst, die dafür bestimmt und eingerichtet ist, nach dem hier und im Folgenden beschriebenen Verfahren zu arbeiten. Die Vorrichtung weist dafür Mittel zum Ausführen sämtlicher Verfahrensschritte auf. Ausgestaltungen der Vorrichtung ergeben sich aus einer Umsetzung einzelner oder mehrerer Merkmale des Anspruchs 1 und der darauf rückbezogenen Ansprüche.

Die Erfindung geht dabei von der Erkenntnis aus, dass durch eine variable Zwischenkreisspannung im Übersteuerungsbereich Modulationsprodukte in der Ausgangsspannung (Motorspannung) entstehen. Die Modulationsprodukte in der Ausgangsspannung haben folgende Frequenzen:

$$f_{SH} = f_{ZK} \pm \nu \cdot f$$

Dabei ist f die vorgegebene oder vorgebbare Grundfrequenz der Ausgangsspannung, die im Folgenden mitunter auch nur kurz als Ausgangsfrequenz, Betriebsfrequenz oder Motorfrequenz bezeichnet wird, $f_{ZK}$ die Frequenz der Welligkeit in der Zwischenkreisspannung und $\nu$ eine ungerade, nicht durch drei teilbare ganze Zahl.

Unterstellt man beispielsweise wie oben schon erwähnt eine Speisung des Zwischenkreises über eine Diodenbrücke, so entsteht bei einem symmetrischen Netz stationär eine Zwischenkreisspannung, die die Vielfachen der sechsfachen Netzspeisefrequenz enthält:

$$f_{ZK} = 6 \cdot \mu \cdot f_N,$$

wobei $f_N$ die Netzspeisefrequenz (Netzfrequenz) ist und $\mu$ eine natürliche Zahl ($\mu = [1, 2, 3, ...]$).

Damit ergeben sich die Frequenzen der Modulationsprodukte am Umrichterausgang:

$$f_{SH} = 6 \cdot \mu \cdot f_N \pm \nu \cdot f \qquad\qquad (1)$$

Der hier vorgestellte Ansatz basiert darauf, dass jeweils eine Subharmonische mit Hilfe einer Regelung ausgeregelt wird oder mehrere Subharmonische mit einer entsprechenden Mehrzahl solcher Regelungen ausgeregelt werden, die additiv zu einer bestehenden u/f-Steuerung oder Vektorregelung wirkt bzw. wirken: Aus den gemessenen Ständerströmen werden Zusatzsollspannungen erzeugt, welche die unerwünschten subharmonischen Anteile in den Strömen wegregeln. Die Regelung arbeitet dabei in einem Koordinatensystem, das mit einer Frequenz der auszuregelnden Subharmonischen (problematische Frequenz) dreht. In diesem Koordinatensystem werden die auftretenden Subharmonischen zu Gleichgrößen, die sich in vorteilhafter Weise mit einem Regler, insbesondere einem Regler, der über einen I-Anteil verfügt, ausregeln lassen.

Zu jeder Kombination von Netzspeisefrequenz $f_N$ und Ausgangsfrequenz f gehört nach der Beziehung in Gleichung (1) eine Vielzahl von Frequenzen der entstehenden Subharmonischen $f_{SH}$. Es ist jedoch nicht erforderlich, für jede der auftretenden Modulationsfrequenzen $f_{SH}$ eine Regelung wirken zu lassen. Vielmehr hat sich herausgestellt, dass es ausreicht, die Regelung auf einzelne Modulationsfrequenzen $f_{SH}$ mit kritischen Ordnungszahlen zu beschränken. Kritisch sind diejenigen subharmonischen Frequenzen $f_{SH}$, bei denen die Amplitude der entstehenden Modulationsprodukte groß und die Frequenz klein sind. Derartige subharmonische Frequenzen $f_{SH}$ treten im Wesentlichen bei sehr hoher Aussteuerung auf, was vor allem in der Feldschwächung gegeben ist. Besonders kritisch ist die Kombination $\mu = 1$ und

$v$ = -5 (positive Ausgangsfrequenz f). Hier wird bei einer Netzspeisefrequenz $f_N$ = 50 Hz und einer Ausgangsfrequenz f = 60 Hz die Frequenz der Subharmonischen $f_{SH}$ nahezu Null und die Amplitude ist beträchtlich.

Bei einer speziellen Ausführungsform des Verfahrens ist vorgesehen, dass der Transformationswinkel ($\varphi_{fSH}$) anhand einer kritischen subharmonischen Frequenz ($f_{SH}$) ermittelt wird, indem der Transformationswinkel ($\varphi_{fSH}$) einerseits anhand einer Frequenz einer Harmonischen einer Spannung im Spannungszwischenkreis - Zwischenkreisspannung - und andererseits anhand einer Frequenz einer Harmonischen einer Ausgangsspannung des Umrichters ermittelt wird. Die Ermittlung der kritischen subharmonischen Frequenz ($f_{SH}$) basiert dann auf der weiter oben beschriebenen Gleichung (1) und bei einer Ausführung des Verfahrens wird die so vorgegebene kritische subharmonische Frequenz ($f_{SH}$) ausgeregelt.

Die oben genannte Aufgabe wird auch mit einer Vorrichtung, nämlich einer Antriebssteuerungseinrichtung eines Umrichterantriebs mit Spannungszwischenkreis oder einer eine solche Vorrichtung umfassenden Antriebssteuerungseinrichtung, gelöst, die nach dem Verfahren wie hier und im Folgenden beschrieben arbeitet und dazu Mittel zur Durchführung des Verfahrens umfasst. Die Erfindung ist dabei entweder in Hardware, Firmware oder Software oder Kombinationen davon implementiert. Soweit die Erfindung in Software implementiert ist, ist diese einerseits auch ein Computerprogramm mit durch einen Computer ausführbaren Programmcodeanweisungen und andererseits ein Speichermedium mit einem derartigen Computerprogramm, also ein Computerprogrammprodukt mit Programmcodemitteln, sowie schließlich auch eine Antriebssteuerungseinrichtung oder ein Antriebssystem, in deren bzw. dessen Speicher als Mittel zur Durchführung des Verfahrens und seiner Ausgestaltungen ein solches Computerprogramm geladen oder ladbar ist.

Die oben erwähnte Vorrichtung mit Mitteln zur Durchführung des Verfahrens oder einzelner Ausgestaltungen des Verfahrens umfasst als Mittel zum Drehen des Stromvektors ($\underline{i}_{\alpha\beta}$) in dem ersten Koordinatensystem in das zweite Koordinatensystem einen ersten, dem Regler vorgeschalteten Vektordreher sowie als Mittel zum Drehen des Spannungsvektors ($d\underline{u}_{xy}$) in dem zweiten Koordinatensystem in das erste Koordinatensystem einen zweiten, dem Regler nachgeschalteten Vektordreher, wobei dem ersten Vektordreher ein den Umfang der Drehung des jeweiligen Vektors bestimmender Transformationswinkel ($\varphi_{fSH}$) und dem zweiten Vektordreher derselbe Transformationswinkel ($\varphi_{fSH}$) oder ein mit derselben Änderungsgeschwindigkeit des Transformationswinkels ($\varphi_{fSH}$) drehender Transformationswinkel zuführbar ist. Als Vektordreher kommt zum Beispiel eine in Soft- und/oder Firmware implementierte Funktionalität in Betracht, die mittels einer parametrierbaren sogenannten Rotationsmatrix eine Drehung eines Vektors bewirkt. Ein solcher Vektordreher verarbeitet also zwei Eingangsgrößen oder zwei Eingangssignale, nämlich zum einen den zu drehenden Vektor und zum anderen den bei der Parametrierung der Rotationsmatrix verwendeten Winkel, hier also den Transformationswinkel ($\varphi_{fSH}$).

Bei einer Ausführungsform der Vorrichtung ist diese so eingerichtet, dass mittels des ersten Vektordrehers eine Rückwärtsdrehung des Stromvektors ($\underline{i}_{\alpha\beta}$) um den Transformationswinkel ($\varphi_{fSH}$) in das zweite Koordinatensystem und mittels des zweiten Vektordrehers eine Vorwärtsdrehung des Spannungsvektors ($d\underline{u}_{xy}$) um einen mit derselben Änderungsgeschwindigkeit drehenden Transformationswinkel, insbesondere eine Vorwärtsdrehung um denselben Transformationswinkel ($\varphi_{fSH}$) zurück in das erste Koordinatensystem bewirkbar ist. Die Rückwärtsdrehung und die spätere Vorwärtsdrehung, insbesondere die Rückwärtsdrehung und die spätere Vorwärtsdrehung um jeweils denselben Transformationswinkel ($\varphi_{fSH}$), bewirken, dass der Ausgang des Reglers schließlich wieder im ursprünglichen Koordinatensystem (Bezugssystem) zur Verfügung steht und damit der Ausgang des Reglers zur Ansteuerung des Umrichters verwendbar ist.

Bei einer Ausführungsform der Vorrichtung umfasst diese einen Regler, der einen Integralanteil aufweist, also zum Beispiel einen PI-Regler oder einen PID-Regler. Der Vorteil der Verwendung eines Reglers, der einen Integralanteil aufweist, besteht bekanntlich darin, dass ein solcher Regler zu keiner bleibenden Regelabweichung führt.

Bei einer weiteren, zusätzlichen oder alternativen Ausführungsform der Vorrichtung ist der Transformationswinkel ($\varphi_{fSH}$) aus der kritischen subharmonischen Frequenz ($f_{SH}$) mittels zumindest eines Integrators generierbar. Dies ist eine einfache und effiziente Möglichkeit, um bei Betrieb der Vorrichtung kontinuierlich oder fortwährend den Transformationswinkel ($\varphi_{fSH}$) zu bilden. Bei einer besonderen Ausführungsform einer solchen Vorrichtung umfasst diese einen ersten Integrator, dem eine jeweilige Ausgangsfrequenz (f), und einen zweiten Integrator, dem ein vorgegebenes oder vorgebbares Vielfaches einer Netzfrequenz ($f_N$) zuführbar ist, wobei ein Ausgang des ersten Integrators über eine Multiplikationsstelle und ein Ausgang des zweiten Integrators auf eine Summationsstelle geführt sind. Mittels der beiden Integratoren wird ein mit der jeweiligen Frequenz fortschreitender Winkel ermittelt. Mittels der Multiplikationsstelle und der Summationsstelle wird auf der Grundlage der oben beschriebenen Gleichung (1) und der verarbeiteten Frequenzen ein mit der jeweils ausgewählten kritischen subharmonischen Frequenz ($f_{SH}$) fortschreitender Winkel, nämlich der Transformationswinkel ($\varphi_{fSH}$), automatisch ermittelt.

Bei einer nochmals weiteren Ausführungsform der Vorrichtung weist diese einen den ersten Vektordreher, den Regler und den zweiten Vektordreher umfassenden Gleichgrößenregler auf, wobei der Gleichgrößenregler einen dem ersten Vektordreher vorgeschalteten Filter, insbesondere einen Filter in Form eines Kerbfilters, umfasst. Mittels eines solchen Filters lassen sich Frequenzen eliminieren, die ansonsten zu einer Verstellung eines Betriebspunktes einer Ansteuerung des Umrichters führen können.

Mit dem hier vorgestellten Ansatz lassen sich Subharmonische in den Ausgangsspannungen (Motorspannungen) und -strömen bei welligen Zwischenkreisspannungen für kritische Ausgangsfrequenzen insbesondere im Übersteuerungsbereich vermeiden. Dies erlaubt in diesen Bereichen eine Verbesserung der Drehmomentenqualität sowie der Umrichterbelastung und erlaubt eine höhere Umrichterausnutzung. Damit wird die Forderung nach einer der Eingangsspannung entsprechenden Ausgangsspannung auch in den kritischen Frequenzbereichen ohne störende Subharmonische mit Diodeneinspeisung realisierbar.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Es zeigen

FIG 1 ein Blockschaltbild einer Ausführungsform für eine Vorrichtung zur Ausregelung von Subharmonischen mit einem Gleichgrößenregler und einer Steuerungseinrichtung,

FIG 2 einen Ausschnitt aus dem Blockschaltbild gemäß FIG 1 mit dem Gleichgrößenregler,

FIG 3 einen Ausschnitt aus dem Blockschaltbild gemäß FIG 1 mit der Steuerungseinrichtung,

FIG 4 einen Ausschnitt aus dem Blockschaltbild gemäß FIG 1 mit der Funktionalität zum Ermitteln eines Winkels aus einer kritischen subharmonischen Frequenz,

FIG 5 einen Verlauf der Phasenströme vor und nach einer Zuschaltung der mit der Vorrichtung in FIG 1 bewirkten Gleichgrößenregelung und

FIG 6 eine schematisch vereinfachte Darstellung einer die Funktionalität gemäß FIG 1 realisierenden Antriebssteuerungseinrichtung.

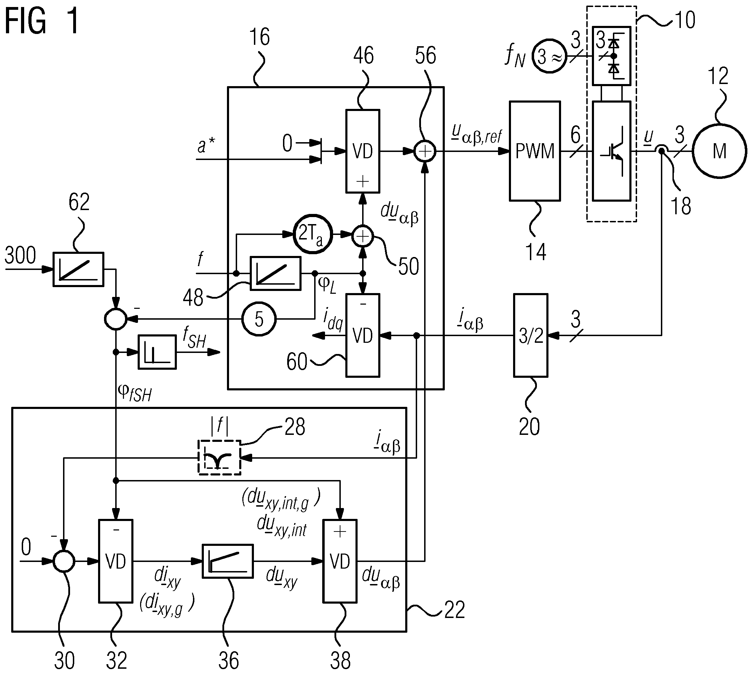

FIG 1 zeigt für den Fall einer u/f-Steuerung ein Blockschaltbild einer Ausführungsform für eine Ausregelung von Subharmonischen mit den eingangs erwähnten kritischen Ordnungszahlen. Das dem Blockschaltbild zugrunde liegende Prinzip kann selbstverständlich auch für andere Ordnungszahlen (v = -7, 11, 13, ...) verwendet werden.

Das Blockschaltbild zeigt ganz rechts als Beispiel für eine Last einen mittels eines Umrichters 10 angetriebenen Motor 12. Der Umrichter 10 umfasst in an sich bekannter Art und Weise einen nur schematisch vereinfacht dargestellten Eingangsstromrichter (Gleichrichter) und einen ebenfalls nur schematisch vereinfacht dargestellten Ausgangsstromrichter (Wechselrichter; Pulsumrichter). Der Umrichter 10 wird aus einem Spannungsversorgungsnetz (gezeigt ist ein Drehstromnetz als Spannungsversorgungsnetz) mit einer Eingangsspannung mit einer jeweiligen Netzspeisefrequenz $f_N$ (zum Beispiel $f_N = 50$ Hz) versorgt. Der Eingangsstromrichter und der Ausgangsstromrichter sind in an sich bekannter Art und Weise über einen Gleichspannungszwischenkreis (nicht dargestellt) verbunden.

Die Ansteuerung der von dem Ausgangsstromrichter umfassten Halbleiterschalter erfolgt in an sich bekannter Art und Weise mittels eines Pulsweitenmodulators 14. Diesem wird mittels einer Steuerungseinrichtung 16, die zum Beispiel eine grundsätzlich an sich bekannte sogenannte u/f-Steuerung oder eine feldorientierte Regelung/Vektorregelung oder dergleichen realisiert, ein Spannungssollwertbefehl ($\underline{u}_{\alpha\beta,ref}$) vorgegeben. Der Spannungssollwertbefehl $\underline{u}_{\alpha\beta,ref}$ ist ein Vektor in den Komponenten $\alpha$ und $\beta$. Der Pulsweitenmodulator 14 generiert daraus sechs Ansteuersignale für den Ausgangsstromrichter des Umrichters 10.

Zur Ausregelung unerwünschter Subharmonischer in der Ausgangsspannung und im daraus resultierenden Motorstrom erfolgt mittels einer Strommesseinrichtung 18 eine Strommessung. Gemessen werden die drei Phasenströme $i_u$, $i_v$ und $i_w$ des Motors 12. Mittels eines 3/2-Transformators 20, der eine an sich bekannte 3/2-Transformation (in der Fachterminologie auch als D/q-Transformation bezeichnet) durchführt, wird der dreiphasige Motorstrom in ein zweiachsiges Koordinatensystem mit den Komponenten $\alpha$ und $\beta$ überführt und am Ausgang des 3/2-Transformators 20 ergibt sich für den Motorstrom ein Vektor in den Komponenten $\alpha$ und $\beta$: $\underline{i}_{\alpha\beta}$. Dieser wird einem Gleichgrößenregler 22 zugeführt, mittels dessen die Ausregelung der unerwünschten Subharmonischen erfolgt.

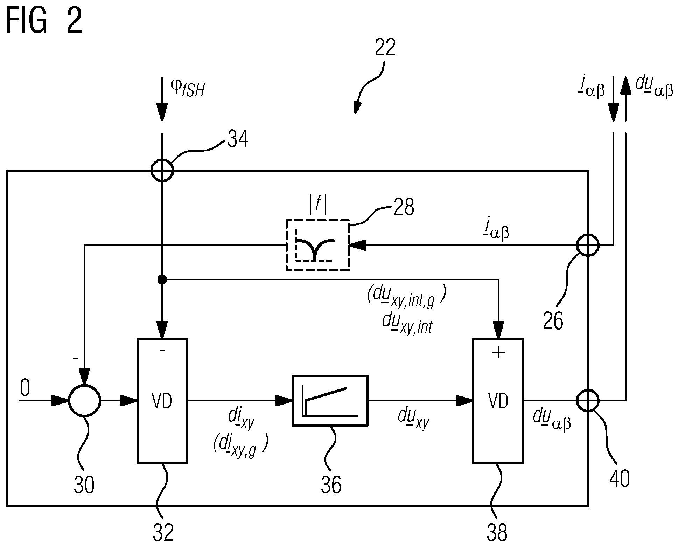

Die Darstellung in FIG 2 zeigt eine vergrößerte Ansicht des Gleichgrößenreglers 22 gemäß FIG 1. Dem Gleichgrößenregler 22 wird an einem ersten Eingang 26 der in den Komponenten $\alpha$ und $\beta$ ausgedrückte Vektor für den Motorstrom ($\underline{i}_{\alpha\beta}$) zugeführt. Mittels eines optionalen Filters, insbesondere eines Filters in Form eines Kerbfilters 28, erfolgt eine Frequenzfilterung. Das Kerbfilter 28 ist dabei zum Beispiel auf die Grundfrequenz der Ausgangsspannung (Ausgangsfrequenz) f abgestimmt. Mittels des optionalen Kerbfilters 28 besteht die Möglichkeit, die Grundschwingung im gemessenen Strom ($\underline{i}_{\alpha\beta}$), also die jeweilige Ausgangs-/Motorfrequenz, herauszufiltern. Dies verhindert, dass es über die von dem Gleichgrößenregler 22 bewirkte Gleichgrößenregelung zu einer Verstellung eines Betriebspunktes der Steuerungseinrichtung 16 kommen kann.

Bei einer Vektorregelung sind allgemein die Sollströme bekannt. Sie können alternativ zu einem Filter von den Iststörmen (gemessene Phasenströme $i_u$, $i_v$ und $i_w$ bzw. Motorstromvektor $\underline{i}_{\alpha\beta}$) abgezogen werden. Die dem Gleichgrößenregler 22 zugeführte Grundschwingung des Differenzstroms wird dann zu Null, so dass auch in diesem Falle der Betriebspunkt der Regelung unbeeinflusst bleibt.

Unabhängig davon, ob und wie eine Frequenzfilterung durchgeführt wurde, wird der Motorstromvektor ($\underline{i}_{\alpha\beta}$) anschließend invertiert, bei der dargestellten Ausführungsform mittels einer Summationsstelle 30, und einer dortigen

Subtraktion des Motorstromvektors ($\underline{i}_{\alpha\beta}$). Der invertierte Motorstromvektor ($-\underline{i}_{\alpha\beta}$) wird sodann einem ersten Vektordreher 32 des Gleichgrößenreglers 22 zugeführt. Der Winkel, um den der erste Vektordreher 32 den Motorstromvektor ($-\underline{i}_{\alpha\beta}$) dreht ($\varphi_{fSH}$), wird dem Gleichgrößenregler 22 an einem zweiten Eingang 34 zugeführt. Dieser ergibt sich aufgrund einer der eingangs beschriebenen kritischen subharmonischen Frequenzen $f_{SH}$.

Die Ermittlung dieses Winkels wird weiter unten erläutert. Zunächst ist wesentlich, dass der erste Vektordreher 32 den Motorstromvektor ($-\underline{i}_{\alpha\beta}$) um einen jeweils vorgegebenen Winkel rückwärts dreht, wie dies durch das Minuszeichen am betreffenden Eingang des ersten Vektordrehers 32 deutlich gemacht ist. Der Motorstromvektor ($-\underline{i}_{\alpha\beta}$) wird damit in ein Koordinatsystem gedreht, das mit einer der kritischen subharmonischen Frequenzen dreht und es ergibt sich der Motorstrom als Vektor in den Komponenten x und y: $\underline{di}_{xy}$.

Der so transformierte Stromvektor ($\underline{di}_{xy}$) wird sodann einem Regler 36, nämlich einem PI-Regler oder allgemein einem Regler, der zumindest einen Integralanteil umfasst, zugeführt. Ein Regler mit einem Integralanteil vermag bekanntlich eine Regelabweichung vollständig auszuregeln und der transformierte Stromvektor ($\underline{di}_{xy}$) wird dem Regler 36 an dessen Eingang wie eine Regelabweichung zugeführt. Der Regler 36 ist also so ausgelegt und parametriert, dass dieser eine Ausregelung der unerwünschten Subharmonischen bewirkt. Am Ausgang des Reglers 36 ergibt sich aufgrund der Integration ein Vektor für eine Zusatzsollspannung für den Motor 12 in den Komponenten x und y, also in dem mit einer der kritischen subharmonischen Frequenzen drehenden Koordinatensystem: $\underline{du}_{xy}$.

Mit einem zweiten Vektordreher 38 des Gleichgrößenreglers 22 wird der Vektor für die Zusatzsollspannung ($\underline{du}_{xy}$) wieder in das $\alpha\beta$-Koordinatensystem gedreht. Dafür verwendet der zweite Vektordreher 38 denselben Drehwinkel, um den der erste Vektordreher 32 zuvor den Motorstromvektor ($-\underline{di}_{\alpha\beta}$ zurückgedreht hatte. Der zweite Vektordreher 38 bewirkt entsprechend eine Vorwärtsdrehung - symbolisch auch durch das Pluszeichen dargestellt - des am Eingang zugeführten Motorspannungsvektors ($\underline{du}_{xy}$) und am Ausgang des zweiten Vektordrehers 38 und als Ausgangsgröße des Gleichgrößenregler 22 insgesamt ergibt sich an dessen Ausgang 40 ein Vektor für die Motorspannung (Zusatzsollspannung) in den Komponenten $\alpha$ und $\beta$: $\underline{du}_{\alpha\beta}$.

Der resultierende Motorspannungsvektor ($\underline{u}_{\alpha\beta}$) wird als Zusatzsollspannung einem von der Steuerungseinrichtung 16 generierten Ausgangssignal hinzugefügt. Für die weitere Erläuterung in dieser Hinsicht erfolgt zunächst eine Beschreibung der Funktionalität der Steuerungseinrichtung 16 für die exemplarische Situation einer dort realisierten u/f-Steuerung.

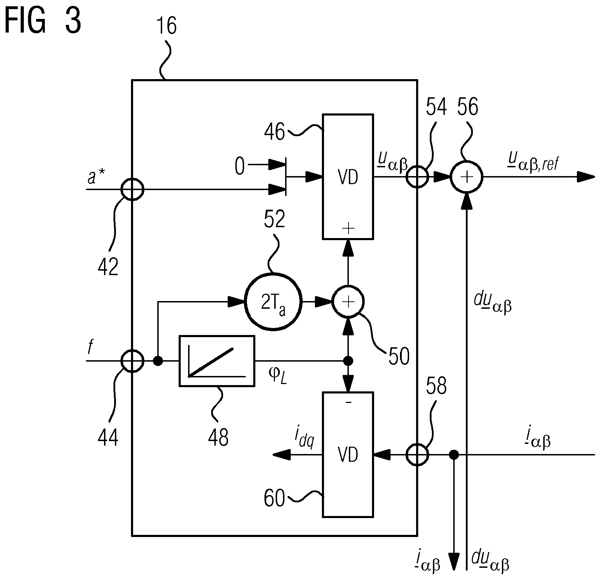

Die Darstellung in FIG 3 zeigt dafür eine vergrößerte Ansicht der Steuerungseinrichtung 16 gemäß FIG 1. Dieser werden an einem ersten Eingang 42 ein Aussteuersollwert (a*) und an einem zweiten Eingang 44 eine jeweilige Ausgangsfrequenz f, also die jeweils gewünschte Grundfrequenz der Ausgangsspannung, vorgegeben. Der skalare Aussteuersollwert (a*) wird in einen Vektor umgewandelt, dessen eine Komponente der Zahlenwert "0" ist und dessen andere Komponente dem Aussteuersollwert (a*) entspricht. Der resultierende Vektor wird einem dritten Vektordreher 46 (erster Vektordreher der Steuerungseinrichtung 16) zugeführt. Der Winkel, um den der dritte Vektordreher 46 den aus dem Aussteuersollwert (a*) resultierenden Vektor dreht, ergibt sich aus der Ausgangsfrequenz f. Dazu wird die der Steuerungseinrichtung 16 an dessen zweitem Eingang 44 vorgegebene Ausgangsfrequenz f mittels eines Integrators 48 integriert. Es ergibt sich der fortschreitende Winkel ($\varphi_L$. Zu diesem wird an einer Summationsstelle 50 ein mit der Ausgangsfrequenz f und einem auf Basis einer Abtastzeit $T_a$ vorgegebenen oder vorgebbaren Faktor (Multiplikationsstelle 52) gebildeter Summand addiert und es ergibt sich der Winkel für den dritten Vektordreher 46. Durch eine Drehung (Vorwärtsdrehung; "+") des aus dem Aussteuersollwert (a*) resultierenden Vektors um diesen Winkel ergibt sich am Ausgang des dritten Vektordrehers 46 und damit am Ausgang 54 der Steuerungseinrichtung 16 insgesamt als Spannungssollwertbefehl für den Pulsweitenmodulator 14 (FIG 1) ein Vektor in den Komponenten $\alpha$ und $\beta$: $\underline{u}_{\alpha\beta}$.

Dem Ausgang des dritten Vektordrehers 46 nachgeordnet ist eine weitere Summationsstelle 56 (hier im Anschluss an den Ausgang 54 gezeigt, aber gegebenenfalls auch als Bestandteil der Steuerungseinrichtung 16 realisierbar. Hier werden der Spannungssollwertbefehl ($\underline{u}_{\alpha\beta}$) und die Zusatzsollspannung ($\underline{du}_{\alpha\beta}$) addiert: $\underline{u}_{\alpha\beta} + \underline{du}_{\alpha\beta} = \underline{u}_{\alpha\beta,ref}$. Auf Basis des resultierenden Spannungsvektors ($\underline{u}_{\alpha\beta,ref}$) erzeugt der Pulsweitenmodulator 14 die Ansteuersignale für den Ausgangsstromrichter des Umrichters 10. Die additive Berücksichtigung der vom Gleichgrößenregler 22 stammenden Zusatzsollspannung ($\underline{du}_{\alpha\beta}$) bewirkt einen angepassten Spannungssollwertbefehl $\underline{u}_{\alpha\beta,ref}$ für den Pulsweitenmodulator 14. Dies bewirkt im Ergebnis die angestrebte Vermeidung der kritischen Subharmonischen, hier der kritischen Subharmonischen mit den Ordnungszahlen $\mu = 1$ und $\nu = -5$.

Ebenfalls gezeigt ist, dass - im Zusammenhang mit dem hier beschriebenen Ansatz allerdings ohne Funktion - der Steuerungseinrichtung 16 an einem dritten Eingang 58 auch der aufgrund der Messung der Phasenströme $i_u$, $i_v$ und $i_w$ des Motors 12 im Anschluss an die 3/2-Wandlung 20 (FIG 1) resultierende Motorstromvektor ($\underline{i}_{\alpha\beta}$) zugeführt wird. Dieser Motorstromvektor ($\underline{i}_{\alpha\beta}$) wird, wie bereits im Zusammenhang mit FIG 2 erläutert, dem Gleichgrößenregler 22 zugeführt und dort weiter verarbeitet. Innerhalb der Steuerungseinrichtung 16 wird aus dem Motorstromvektor ($\underline{i}_{\alpha\beta}$) in den Komponenten $\alpha$ und $\beta$ mittels eines vierten Vektordrehers 60 (zweiter Vektordreher der Steuerungseinrichtung 16) durch Rückwärtsdrehung - symbolisch auch durch das Minuszeichen dargestellt - um den aus der Ausgangsfrequenz f resultierenden Winkel $\varphi_L$ der Motorstromvektor ($\underline{i}_{dq}$) in den Komponenten d und q, also im Koordinatensystem des Ständerflusses, gebildet.

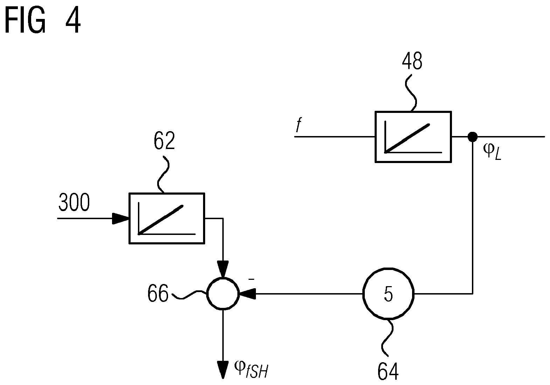

Offen ist jetzt noch die Erläuterung der Generierung des für den Gleichgrößenregler 22 und dessen Vektordreher 32, 38 verwendeten Winkels ($\varphi_{fSH}$) aufgrund einer der eingangs beschriebenen kritischen subharmonischen Frequenzen $f_{SH}$. Dafür zeigt die Darstellung in FIG 4 einen Ausschnitt aus dem Blockschaltbild in FIG 1 mit den insoweit relevanten Komponenten.

Im Zusammenhang mit der Darstellung in FIG 3 ist bereits erläutert worden, dass sich aus der Ausgangsfrequenz f durch Integration (Integrator 48 / erster Integrator 48) der fortschreitende Winkel ($\varphi_L$ ergibt. Ein entsprechend fortschreitender Winkel ergibt sich durch Integration (zweiter Integrator 62) aus der Frequenz der ersten ($\mu = 1$) Harmonischen der Zwischenkreisspannung: $f_{ZK} = 6\ \mu\ f_N = 6 \times 50\ Hz = 300\ Hz$ (darauf basiert der am Eingang des zweiten Integrators 62 gezeigte Zahlenwert "300"). Dieser Winkel sowie der auf der Ausgangsfrequenz f basierende und an einer Multiplikationsstelle 64 mit einem vorgegebenen oder vorgebbaren Faktor, hier "5", multiplizierte Winkel ($\varphi_L$) werden an einer Summationsstelle 66 subtrahiert und es ergibt sich der im Gleichgrößenregler 22 verwendete Winkel ($\varphi_{fSH}$. Das Blockschaltbild in FIG 4 ist dementsprechend also eine Implementation einer Ermittlung eines auf Basis einer der kritischen subharmonischen Frequenzen ($\mu = 1$, $\nu = -5$) fortschreitenden Winkels und insoweit eine Implementation der eingangs erwähnten Gleichung (1): $f_{SH} = 6\ \mu\ f_N \pm \nu\ f$ für $\mu = 1$ und $\nu = -5$, so dass $\varphi_{fSH} = \int 300\ Hz\ dt - 5\ \int f\ dt = \int (300\ Hz - 5f)\ dt = \int f_{SH}\ dt$ ist. Genauso, wie in der vorangehenden Beziehung das Integralsymbol durchgeschoben werden kann, kann auch in dem Blockschaltbild der Ort der Integration durchgeschoben werden, so dass die Generierung des Transformationswinkels ($\varphi_{fSH}$) auch mit einem Integrator möglich ist. Das Blockschaltbild in FIG 4 ist jedenfalls ein Beispiel für eine Realisierungsmöglichkeit einer Generierung des Transformationswinkel ($\varphi_{fSH}$) aus der kritischen subharmonischen Frequenz ($f_{SH}$) mittels zumindest eines Integrators 48, 62, hier des ersten und des zweiten Integrators 48, 62.

Der so ermittelte fortschreitende Winkel ($\varphi_{fSH}$) wird - wie bereits weiter oben beschrieben - im Gleichgrößenregler 22 verwendet, um den Strom- und Spannungsvektor ($\underline{i}_{\alpha\beta}$) bzw. ($\underline{du}_{xy}$) zunächst rückwärts und später um den gleichen Winkelwert vorwärts zu drehen. Damit ergibt sich nach der ersten Drehung (erster Vektordreher 32) zunächst ein gedrehter Stromvektor ($\underline{di}_{xy}$), der mit der jeweils kritischen subharmonischen Frequenz ($f_{SH}$) dreht. Dieser wird zur Ausregelung der resultierenden Gleichgrößen einem Regler 36 zugeführt. Der am Ausgang des Reglers 36 resultierende Spannungsvektor ($\underline{du}_{xy}$) wird sodann in das Koordinatensystem des ursprünglichen Stromvektors ($\underline{i}_{\alpha\beta}$) zurückgedreht, so dass der Ausgang des Gleichgrößenreglers 22 zusammen mit dem im selben Koordinatensystem vorliegenden Ausgang der Steuerungseinrichtung 16 verarbeitet werden kann.

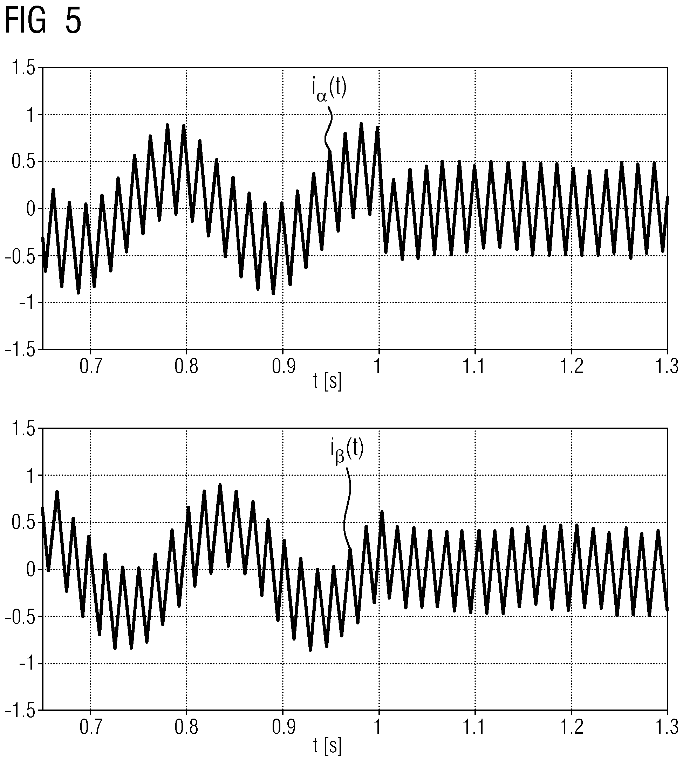

Die Darstellung in FIG 5 zeigt exemplarisch ein Resultat der so erreichten Gleichgrößenregelung. Dargestellt sind die bei einer u/f-Steuerung in der Übersteuerung resultierenden Phasenströme $i_\alpha(t)$ und $i_\beta(t)$ in den Komponenten $\alpha$ und $\beta$ im Leerlauf und bei einer Ausgangsfrequenz f von 59 Hz. Auf den Abszissen ist jeweils die Zeit in Sekunden abgetragen. Die Darstellung in FIG 5 basiert auf einer Aktivierung der Gleichgrößenregelung etwa zum Zeitpunkt t = 1s. Man erkennt ohne Weiteres die erreichte deutliche Reduzierung (tatsächlich eine weitgehende Elimination) der vorangehenden Welligkeit der Phasenströme $i_\alpha(t)$ und $i_\beta(t)$ aufgrund unerwünschter Harmonischer in der Zwischenkreisspannung.

Ist in der Zwischenkreisspannung nicht nur eine 300 Hz-Komponente, sondern eine weitere Komponente (zum Beispiel eine 600 Hz-Komponente, wie sie sich bei einer Diodeneinspeisung ergibt) vorhanden, kann sinngemäß wie oben für diese Frequenz eine weitere Regelung parallel zur vorgeschlagenen angewendet werden. Die zugehörige Grundfrequenz der Ausgangsspannung (Ausgangsfrequenz) würde dann bei f = 120 Hz liegen. Zu einer solchen kritischen Subharmonischen gehören entsprechend die Ordnungszahlen $\mu = 2$ und $\nu = -5$. Bei anderen Ordnungszahlen wird die Multiplikationsstelle 64 (FIG 4) entsprechend angepasst und/oder es wird am Ausgang des Integrators 62 (FIG 4) eine weitere Multiplikationsstelle (nicht gezeigt) hinzugefügt.

Eine einfache Möglichkeit zur (zeitweisen) Deaktivierung der Gleichgrößenregelung besteht darin, dass der Gleichgrößenregler 22 durch Zuziehen der Reglerausgänge deaktiviert wird. Dies kommt zum Beispiel dann in Betracht, wenn sich ergibt, dass sich die Ausgangsfrequenz betragsmäßig ausreichend von 60 Hz unterscheidet.

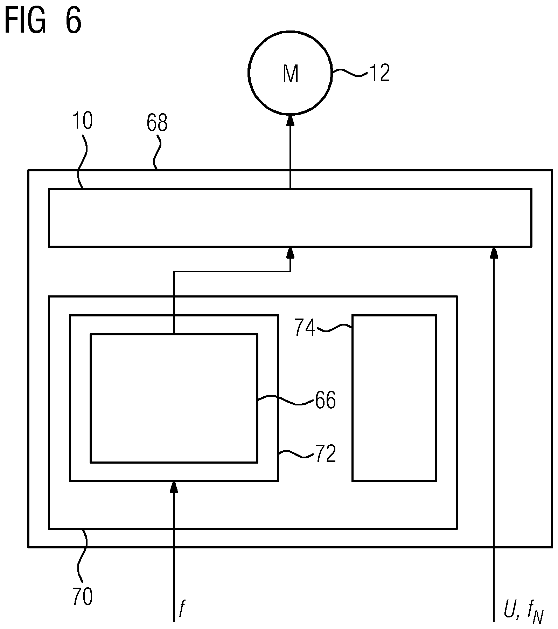

Die Darstellung in FIG 6 zeigt abschließend eine schematisch vereinfachte Darstellung einer die Funktionalität gemäß FIG 1 realisierenden Antriebssteuerungseinrichtung 68. Diese umfasst den Umrichter 10 oder der Antriebssteuerungseinrichtung 68 ist der Umrichter 10 als separate Funktionseinheit insbesondere modular zugeordnet. Jedenfalls umfasst die Antriebssteuerungseinrichtung 68 eine Zentraleinheit 70 mit einem Speicher 72 und einer Verarbeitungseinheit 74 in Form von oder nach Art eines Mikroprozessors. In den Speicher 72 ist ein Computerprogramm 76 geladen, mit dem die Funktionalität des Blockschaltbilds in FIG 1 implementiert ist. Das Computerprogramm 76 umfasst demnach also jeweils eine Softwarefunktionalität zur Implementierung der Steuerungseinrichtung 16 (FIG 1) und eine Softwarefunktionalität zur Implementierung des Gleichgrößenreglers 22 (FIG 1) und der davon jeweils umfassten Funktionseinheiten, also zum Beispiel eine Implementation eines Vektordrehers 32, 38, 46, 60 und eine Implementation eines Reglers 36. Die Implementation der Funktionalität des Blockschaltbilds in FIG 1 in Software in Form eines Computerprogramms 76 ist jedoch nur eine mögliche Ausführungsform. Genauso kommt eine Implementation in Hardware oder in Hard- und Firmware oder in Hard-, Firm- und/oder Software in Betracht. Der Antriebssteuerungseinrichtung 68 wird die jeweilige Netzspannung (U) mit der jeweiligen Netzfrequenz ($f_N$) zugeführt. Des Weiteren wird der Antriebssteuerungseinrichtung 68 die jeweils gewünschte Ausgangsfrequenz (f) extern vorgegeben oder als Betriebsparameter im Speicher 72 abgelegt.

Ebenfalls als Betriebsparameter im Speicher 72 sind Daten zur Auswahl der jeweils mittels des Gleichgrößenreglers 22 (FIG 1; FIG 3) auszuregelnden kritischen subharmonischen Frequenz (en) ($f_{SH}$). Solche Daten können die oder jede jeweilige kritische subharmonische Frequenz ($f_{SH}$) unmittelbar angeben oder zugrunde liegende Parameter, insbesondere die Ordnungszahlen $\mu$ und $\nu$, zum Beispiel $\mu = 1$ und $\nu = -5$, umfassen. Mittels des Computerprogramms 76, das auch die Funktionalität des Pulsweitenmodulators 14 (FIG 1) umfassen kann, erfolgt die Ansteuerung des Umrichters 10 und schließlich die Ansteuerung des Motors 12.

Die Zentraleinheit 70 der Antriebssteuerungseinrichtung 68 ist also eine Vorrichtung mit einer Verarbeitungseinheit 74 und einem Speicher 72, in den ein Computerprogramm 76 geladen ist, das im Betrieb der Antriebssteuerungseinrichtung 68 durch dessen Verarbeitungseinheit 74 ausgeführt wird und das eine Implementation des hier beschriebenen Verfahrens und gegebenenfalls einzelner Ausführungsformen des Verfahrens implementiert. Die Zentraleinheit 70 ist damit ebenfalls ein Beispiel für eine Vorrichtung mit Mitteln zur Ausführung eines solchen Verfahrens.

Obwohl die Erfindung im Detail durch das Ausführungsbeispiel näher illustriert und beschrieben wurde, ist die Erfindung nicht durch das oder die offenbarten Beispiele eingeschränkt und andere Variationen können vom Fachmann hieraus abgeleitet werden, ohne den Schutzumfang der Erfindung zu verlassen.

Einzelne im Vordergrund stehende Aspekte der hier eingereichten Beschreibung lassen sich damit kurz wie folgt zusammenfassen:

Angegeben werden ein Verfahren zum Betrieb einer Antriebssteuerungseinrichtung 68, die einen Umrichter 10 mit einem Spannungszwischenkreis umfasst, und eine nach dem Verfahren arbeitende Vorrichtung, wobei im Betrieb mittels des Umrichters 10 erzeugte Phasenströme gemessen werden, wobei aus den gemessenen Phasenströmen ein Stromvektor ($\underline{i}_{\alpha\beta}$) in einem ersten Koordinatensystem ($\alpha\beta$-Koordinatensystem) gebildet wird, wobei der Stromvektor ($\underline{i}_{\alpha\beta}$) um einen Transformationswinkel (($\varphi_{fSH}$) in ein zweites Koordinatensystem (xy-Koordinatensystem) gedreht wird, wobei ein resultierenden Stromvektor ($\underline{i}_{xy}$) in dem zweiten Koordinatensystem einem Regler 36 zugeführt wird, wobei ein am Ausgang des Reglers 36 resultierender Spannungsvektor ($d\underline{u}_{xy}$) um denselben Transformationswinkel ($\varphi_{fSH}$) oder einen Transformationswinkel, der mit derselben Änderungsgeschwindigkeit dreht, zurück in das erste Koordinatensystem gedreht wird und wobei der resultierende Spannungsvektor ($d\underline{u}_{\alpha\beta}$) in dem ersten Koordinatensystem als zu einer u/f- Steuerung oder Vektorregelung zusätzliche Einflussgröße zu Ansteuerung des Umrichters 10 verwendet wird.

**Patentansprüche**

1. Verfahren zum Betrieb einer Antriebssteuerungseinrichtung (68), die einen Umrichter (10) mit einem Spannungszwischenkreis umfasst, mit folgenden Schritten:

   - Messung im Betrieb mittels des Umrichters (10) erzeugter Phasenströme;
   - Bildung eines Stromvektors ($\underline{i}_{\alpha\beta}$) in einem ersten Koordinatensystem ($\alpha\beta$-Koordinatensystem) aus den gemessenen Phasenströmen;
   - Drehung des Stromvektors ($\underline{i}_{\alpha\beta}$) um einen Transformationswinkel ($\varphi_{fSH}$) in ein zweites Koordinatensystem (xy-Koordinatensystem);
   - Zuführung eines resultierenden Stromvektors ($d\underline{i}_{xy}$) in dem zweiten Koordinatensystem zu einem Regler (36);
   - Zurückdrehen eines am Ausgang des Reglers (36) resultierenden Spannungsvektors ($d\underline{u}_{xy}$) um den Transformationswinkel ($\varphi_{fSH}$) oder einen mit derselben Änderungsgeschwindigkeit des Transformationswinkels ($\varphi_{fSH}$) drehenden Transformationswinkel in das erste Koordinatensystem;
   - Verwendung des resultierenden Spannungsvektors ($d\underline{u}_{\alpha\beta}$) in dem ersten Koordinatensystem als zusätzliche Einflussgröße zu einer u/f-Steuerung oder Vektorregelung zur Ansteuerung des Umrichters (10) und
   - Ermittlung des Transformationswinkels ($\varphi_{fSH}$) anhand einer kritischen subharmonischen Frequenz ($f_{SH}$).

2. Verfahren nach Anspruch 1, mit folgendem weiteren Schritt:

   - Ermittlung des Transformationswinkels ($\varphi_{fSH}$) anhand einer kritischen subharmonischen Frequenz ($f_{SH}$), indem der Transformationswinkel ($\varphi_{fSH}$) einerseits anhand einer Frequenz einer Harmonischen einer Spannung im Spannungszwischenkreis - Zwischenkreisspannung - und andererseits anhand einer Frequenz einer Harmonischen einer Ausgangsspannung des Umrichters (10) ermittelt wird.

3. Vorrichtung mit Mitteln zur Durchführung des Verfahrens nach einem der vorangehenden Ansprüche,

   - wobei als Mittel zum Drehen des Stromvektors ($\underline{i}_{\alpha\beta}$) in dem ersten Koordinatensystem in das zweite Koordinatensystem ein erster, dem Regler (36) vorgeschalteter Vektordreher (32) fungiert,
   - wobei als Mittel zum Drehen des Spannungsvektors ($d\underline{u}_{xy}$) in dem zweiten Koordinatensystem in das erste Koordinatensystem ein zweiter, dem Regler (36) nachgeschalteter Vektordreher (38) fungiert und
- wobei dem ersten Vektordreher (32) der Transformationswinkel ($\varphi_{fSH}$) und dem zweiten Vektordreher (38) derselbe Transformationswinkel ($\varphi_{fSH}$) oder ein mit derselben Änderungsgeschwindigkeit des Transformationswinkels ($\varphi_{fSH}$) drehender Transformationswinkel zugeführt wird.

4. Vorrichtung nach Anspruch 3, wobei mittels des ersten Vektordrehers (32) eine Rückwärtsdrehung des Stromvektors ($\underline{i}_{\alpha\beta}$) um den Transformationswinkel ($\varphi_{fSH}$) in das zweite Koordinatensystem und mittels des zweiten Vektordrehers (38) eine Vorwärtsdrehung des Spannungsvektors ($\underline{du}_{xy}$) um den Transformationswinkel ($\varphi_{fSH}$) oder einen mit derselben Änderungsgeschwindigkeit des Transformationswinkels ($\varphi_{fSH}$) drehenden Transformationswinkel zurück in das erste Koordinatensystem bewirkbar ist.

5. Vorrichtung nach Anspruch 3 oder 4, wobei der Regler (36) einen Integralanteil umfasst.

6. Vorrichtung nach Anspruch 3, 4 oder 5, wobei der Transformationswinkel ($\varphi_{fSH}$) aus der kritischen subharmonischen Frequenz ($f_{SH}$) mittels zumindest eines Integrators (48,62) generierbar ist.

7. Vorrichtung nach Anspruch 6, mit einem ersten Integrator (48), dem eine jeweilige Ausgangsfrequenz (f), und einem zweiten Integrator (62), dem ein vorgegebenes oder vorgebbares Vielfaches einer Netzfrequenz ($f_N$) zuführbar ist und wobei ein Ausgang des ersten Integrators (48) über eine Multiplikationsstelle (64) und ein Ausgang des zweiten Integrators (62) auf eine Summationsstelle (66) geführt sind.

8. Vorrichtung nach einem der Ansprüche 3 bis 7, mit einem den ersten Vektordreher (32), den Regler (36) und den zweiten Vektordreher (38) umfassenden Gleichgrößenregler (22), wobei der Gleichgrößenregler (22) einen Filter, insbesondere einen Filter in Form eines Kerbfilters (28), umfasst.

9. Computerprogrammprodukt, welches auf einem von einem Computer verwendbaren Medium gespeichert ist und computerlesbare Programmmittel beinhaltet, um die Antriebssteuereinrichtung (68) zu veranlassen, die Schritte gemäß Anspruch 1 oder 2 auszuführen.

10. Antriebssteuerungseinrichtung (68) mit einer Vorrichtung nach einem der Ansprüche 3 bis 8 oder mit einer Verarbeitungseinheit (74) und einem Speicher (72), in den ein Computerprogrammprodukt (76) nach Anspruch 9 geladen ist, das im Betrieb der Antriebssteuerungseinrichtung (68) durch dessen Verarbeitungseinheit (74) ausgeführt wird.

## Claims

1. Method for operating a drive control device (68) having a converter (10) with a DC link circuit, comprising the following steps:

- Measuring phase currents generated by means of the converter (10) during operation,
- Forming a current vector ($\underline{i}_{\alpha\beta}$) in a first coordinate system ($\alpha\beta$ coordinate system) from the measured phase currents,
- Rotating the current vector ($\underline{i}_{\alpha\beta}$) by a transformation angle ($\varphi_{fSH}$) into a second coordinate system (xy coordinate system),
- Returning a resulting current vector ($\underline{i}_{xy}$) in the second coordinate system to a regulator (36),
- Rotating a voltage vector ($\underline{du}_{xy}$) resulting at the output of the regulator (36) by the transformation angle ($\varphi_{fSH}$) or by a transformation angle rotating with the same speed of change of the transformation angle ($\varphi_{fSH}$) back into the first coordinate system and
- Using the resulting voltage vector ($\underline{du}_{\alpha\beta}$) in the first coordinate system as an additional influencing variable for a U/f control or vector regulation for activating the converter (10) and
- Determining the transformation angle ($\varphi_{fSH}$) on the basis of a critical subharmonic frequency ($f_{SH}$).

2. Method according to claim 1, comprising the following further step:

- Determining the transformation angle ($\varphi_{fSH}$) on the basis of a critical subharmonic frequency ($f_{SH}$), by the transformation angle ($\varphi_{fSH}$) being determined on the one hand on the basis of a frequency of a harmonic of a voltage in the DC link circuit
- link circuit voltage - and on the other hand on the basis of a frequency of a harmonic of an output voltage of the converter (10).

3. Facility with means for carrying out the method according to one of the preceding claims,

   - wherein a first vector rotator (32) connected upstream of the regulator (36) functions as a means for rotating the current vector ($\underline{i}_{\alpha\beta}$) in the first coordinate system into the second coordinate system,
   - wherein a second vector rotator (32) connected downstream of the regulator (36) functions as a means for rotating the voltage vector ($d\underline{u}_{xy}$) in the second coordinate system into the first coordinate system and
   - wherein the transformation angle ($\varphi_{fSH}$) is able to be supplied to the first vector rotator (32) and the same transformation angle ($\varphi_{fSH}$) or a transformation angle rotating at the same speed of change as the transformation angle ($\varphi_{fSH}$) is supplied to the second vector rotator (38).

4. Facility according to claim 3, wherein, by means of the first vector rotator (32) a backwards rotation of the current vector ($\underline{i}_{\alpha\beta}$) by the transformation angle ($\varphi_{fSH}$) into the second coordinate system and by means of the second vector rotator (38) a forwards rotation of the voltage vector ($d\underline{u}_{xy}$) by the transformation angle ($\varphi_{fSH}$) or a transformation angle rotating at the same speed of change as the transformation angle ($\varphi_{fSH}$) back into the first coordinate system is able to be effected.

5. Facility according to claim 3 or 4, wherein the regulator (36) includes an integral component.

6. Facility according to claim 3, 4 or 5, wherein the transformation angle ($\varphi_{fSH}$) is able to be generated from the critical subharmonic frequency ($f_{SH}$) by means of at least one integrator (48, 62).

7. Facility according to claim 6, with a first integrator (48), to which a respective output frequency (f), and a second integrator (62), to which a predetermined or predeterminable multiple of a network frequency ($f_N$) is able to be supplied and wherein an output of the first integrator (48) are routed via a multiplication point (64) and an output of the second integrator (62) to a summation point (66).

8. Facility according to one of claims 3 to 7, with a zero-frequency regulator (22) comprising the first vector rotator (32), the regulator (36) and the second vector rotator (38), wherein the zero-frequency regulator (22) includes a filter, especially a filter in the form of a notch filter (28).

9. Computer program product, which is stored on a medium which can be used by a computer and contains computer-readable program code in order to prompt the drive control device (68) to execute the steps according to claim 1 or 2.

10. Drive control device (68) with a facility according to one of claims 3 to 8 or with a processing unit (74) and a memory (72) in which a computer program product (76) according to claim 9 is loaded, which is executed during operation of the drive control device (68) by the processing unit (74) of said device.


**Revendications**

1. Procédé pour faire fonctionner un dispositif (68) de commande d'entraînement, qui comprend un convertisseur (10) ayant un circuit de tension intermédiaire, ayant les stades suivants :

   - mesure de courant de phase produit en fonctionnement au moyen du convertisseur (10);
   - formation d'un vecteur ($\underline{i}_{\alpha\beta}$) de courant dans un premier système de coordonnées (système de coordonnées $\alpha\beta$) à partir des courants de phase mesurés;
   - rotation du vecteur ($\underline{i}_{\alpha\beta}$) de courant d'un angle ($\varphi_{fSH}$) de transformation en un deuxième système de coordonnées (système de coordonnées xy);
   - envoi d'un vecteur ($d\underline{i}_{xy}$) de courant résultant dans le deuxième système de coordonnées à un régleur (36);
   - rotation en retour dans le premier système de coordonnées d'un vecteur ($d\underline{u}_{xy}$) de tension résultant à la sortie du régleur (36) de l'angle ($\varphi_{fSH}$) de transformation ou d'un angle de transformation tournant à la même vitesse de variation que l'angle ($\varphi_{fSH}$) de transformation;
   - utilisation du vecteur ($d\underline{u}_{\alpha\beta}$) de tension résultant dans le premier système de coordonnées comme paramètre supplémentaire à une commande u/f ou à une régulation de vecteur pour commander le convertisseur (10) et
   - détermination de l'angle ($\varphi_{fSH}$) de transformation à l'aide d'une fréquence ($f_{SH}$) critique sous harmonique.

**2.** Procédé suivant la revendication 1, comprenant l'autre stade suivant :

- détermination de l'angle ($\varphi_{fSH}$) de transformation à l'aide d'une fréquence ($f_{SH}$) critique sous harmonique, en déterminant l'angle ($\varphi_{fSH}$) de transformation d'une part à l'aide d'une fréquence d'un harmonique d'une tension dans le circuit intermédiaire de tension - tension de circuit intermédiaire - et d'autre part à l'aide d'une fréquence d'un harmonique d'une tension de sortie du convertisseur (10).

**3.** Système comprenant des moyens pour effectuer le procédé suivant l'une des revendications précédentes,

- dans lequel, comme moyen pour faire tourner le vecteur ($\underline{i}_{\alpha\beta}$) de courant du premier système de coordonnées dans le deuxième système de coordonnées, est utilisé un premier tourneur (32) de vecteur, monté en amont du régleur (36),
- dans lequel, comme moyen pour faire tourner le vecteur ($d\underline{u}_{xy}$) de tension du deuxième système de coordonnées dans le premier système de coordonnées, est utilisé un deuxième tourneur (38) de vecteur, monté en aval du régleur (36) et
- dans lequel, on envoie, au premier tourneur (32) de vecteur, l'angle ($\varphi_{fSH}$) de transformation et, au deuxième tourneur (38) de vecteur, le même angle ($\varphi_{fSH}$) de transformation ou un angle de transformation tournant à la même vitesse de variation que l'angle ($\varphi_{fSH}$) de transformation.

**4.** Système suivant la revendication 3, dans lequel, au moyen du premier tourneur de vecteur, on peut provoquer une rotation en arrière du vecteur ($\underline{i}_{\alpha\beta}$) de courant de l'angle ($\varphi_{fSH}$) de transformation dans le deuxième système de coordonnées et, au moyen du deuxième tourneur (38) de vecteur, une rotation en l'avant du vecteur ($d\underline{u}_{xy}$) de tension de l'angle ($\varphi_{fSH}$) de transformation ou d'un angle de transformation tournant à la même vitesse de variation que l'angle ($\varphi_{fSH}$) de transformation en arrière dans le premier système de coordonnées.

**5.** Système suivant la revendication 3 ou 4, dans lequel le régleur (36) comprend une partie intégrale.

**6.** Système suivant la revendication 3, 4 ou 5, dans lequel l'angle ($\varphi_{fSH}$) de transformation peut être produit à partir de la fréquence ($f_{SH}$) critique sous harmonique au moyen d'au moins un intégrateur (48, 62).

**7.** Système suivant la revendication 6, comprenant un premier intégrateur (48), auquel peut être envoyée une fréquence (f) initiale respective et un deuxième intégrateur (62), auquel peut être envoyé un multiple donné à l'avance ou pouvant l'être d'une fréquence ($f_N$) de réseau et dans lequel un signal de sortie du premier intégrateur (48) est envoyé par l'intermédiaire d'un point (64) de multiplication et un signal de sortie du deuxième intégrateur (62) est envoyé à un point (66) de sommation

**8.** Système suivant l'une des revendications 3 à 7, comprenant un régleur (22) de grandeur continue, comprenant le premier tourneur (32) de vecteur, le régleur (36) et le deuxième tourneur (38) de vecteur, le régleur (22) de grandeur continue comprenant un filtre, notamment un filtre sous la forme d'un filtre (28) à encoche.

**9.** Produit de programme d'ordinateur, qui est mémorisé sur un support pouvant être utilisé par un ordinateur et qui comporte des moyens de programme déchiffrables par ordinateur pour faire que le dispositif (68) de commande d'entraînement effectue les stades suivant la revendication 1 ou 2.

**10.** Dispositif (68) de commande d'entraînement ayant un système suivant l'une des revendications 3 à 8 ou une unité (74) de traitement et une mémoire (72), dans lequel le produit (76) de programme d'ordinateur suivant la revendication 9 est chargé, qui est exécuté, lorsque le dispositif (68) de commande d'entraînement est en fonctionnement, par son unité (74) de traitement.

# FIG 1

## FIG 2

FIG 3

FIG 4

FIG 5

FIG 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **ANDREAS STEIMEL.** Direct Self-Control and Synchronous Pulse Techniques for High-Power Traction Inverters in Comparison. *IEEE Transactions on Industrial Electronics,* 01. August 2004, vol. 51 (4), 810-820